Europäisches Patentamt

European Patent Office

Office européen des brevets

(19)

(11) **EP 0 525 984 B1**

(12) **EUROPEAN PATENT SPECIFICATION**

(45) Date of publication and mention
of the grant of the patent:
**27.03.1996 Bulletin 1996/13**

(51) Int. Cl.[6]: **C03B 8/04**, C03B 19/14,
C03B 37/014, C03C 1/00

(21) Application number: **92305957.0**

(22) Date of filing: **29.06.1992**

(54) **Method for manufacturing a silica glass article for use with an excimer laser**

Verfahren zur Herstellung eines Glasgegenstandes aus Quarzglas zum Gebrauch mit einem Excimerlaser

Procédé pour la fabrication d'un article en verre à haute teneur en silice pour l'usage dans un laser à excimer

(84) Designated Contracting States:
**DE FR GB**

(30) Priority: **29.06.1991 JP 182857/91**

(43) Date of publication of application:
**03.02.1993 Bulletin 1993/05**

(73) Proprietors:
• **SHIN-ETSU QUARTZ PRODUCTS CO., LTD.**
**Shinjuku-ku, Tokyo (JP)**
• **Shin-Etsu Chemical Co., Ltd.**
**Chiyoda-ku Tokyo 100 (JP)**

(72) Inventors:
• **Nishimura, Hiroyuki**
**Fukushima-ken, (JP)**
• **Fujinoki, Akira**
**Fukushima-ken (JP)**
• **Matsuya, Toshikatsu**
**Fukushima-ken (JP)**
• **Takita, Masatoshi**
**Niigata-ken, (JP)**

(74) Representative: **Whalley, Kevin**
**MARKS & CLERK,**
**57-60 Lincoln's Inn Fields**
**London WC2A 3LS (GB)**

(56) References cited:
EP-A- 0 146 659    EP-A- 0 401 845
EP-A- 0 436 185    WO-A-90/10596
GB-A- 2 083 806    US-A- 5 043 002

• CHEMICAL ABSTRACTS, vol. 103, no. 14, 7 October 1985, Columbus, Ohio, US; abstract no. 109042m, page 269 ;column L ; & JP-A-60 090 837 (SHIN-ETSU CHEM IND CO LTD) 22.5.1985
• PATENT ABSTRACTS OF JAPAN vol. 14, no. 270 (C-727)12 June 1990 & JP-A-20 80 343 (SHIN-ETSU CHEM CO LTD) 20 March 1990 *abstract*
• CHEMICAL ABSTRACTS, vol. 103, no. 14, 7 October 1985, Columbus, Ohio, US; abstract no. 109043n, page 269 ;column L ; *abstract* & JP-A-60 090 836 (SHIN-ETSU CHEM IND CO LTD) 22.5.1985
• CHEMICAL ABSTRACTS, vol. 103, no. 14, 7 October 1985, Columbus, Ohio, US; abstract no. 109041k, page 268 ;column R ; *abstract* & JP-A-60 090 838 (SHIN-ETSU CHEM IND CO LTD) 22.5.1985
• CHEMICAL ABSTRACTS, vol. 112, no. 2, 8 January 1990, Columbus, Ohio, US; abstract no. 11004m, page 218 ;column L ; *abstract* & JP-A-1 145 345 (MITSUBISHI CABLE IND LTD) 7.6.89
• PATENT ABSTRACTS OF JAPAN vol. 13, no. 211 (C-597)17 May 1989; & JP-A-10 28 240 (shinetsu sekiei KK) 30 January 1989 *abstract*
• PATENT ABSTRACTS OF JAPAN vol. 13, no. 494 (C-651)8 November 1989 & JP-A-11 97 343 (SHINETSU SEKIEI KK) 9 Aug. 1989 *abstract*
• PATENT ABSTRACTS OF JAPAN vol. 13, no. 431 (C-640)26 September 1989 & JP-A-11 67 258 (SHINETSU SEKIEI KK) 30 June 1989

## Description

The present invention relates to a method for manufacturing a silica glass article having minimal paramagnetic defects and which exhibits excellent stability to irradiation with ultraviolet rays, and especially an excimer laser.

More particularly, the present invention relates to a method for manufacturing silica glass articles, such as a stepper lens used for use in lithography wherein an excimer laser is used to print semiconductor chips, as well as other optical glass articles which are exposed to excimer laser rays.

As a result of the recent tendency for higher integration of LSI (large scale integration), further improvements are desired in the optical lithography technology used to write integrated circuit patterns on wafers. The circuit patterns must be written with a precision correct to the submicron degree and the width of the printed lines must be reduced so as to attain such high precision. To this end, trials have been carried out wherein light sources of shorter wave lengths were used in the exposure system. In order to cope with the shorter wave lengths, the stepper lens for the lithography must be highly homogenized, have a high ultraviolet light transmittance, and a high resistivity against ultraviolet light.

However, the conventional lenses made from commonly used optical-grade glass exhibit extremely poor ultraviolet light transmittance. For example, the transmittance of such lenses decreases sharply as the wave length becomes shorter than 365 nm (i-line light). The lower the transmittance, the greater the absorption of the light. Therefore, lenses of such optical glass are heated by the absorbed light resulting in variation of their focal distances and other properties. Consequently, the conventional lenses are unusable for this application, and silica glass has been used to make lenses to transmit ultraviolet rays.

However, silica glass made from natural quartz exhibits poor light transmittance when wave length of the light is 250 nm or less. In addition, as a result, when such silica glass is subjected to ultraviolet rays, the glass is converted and begins to adsorb light having wave lengths in the ultraviolet light region. Consequently, its light transmittance in the ultraviolet wave length region deteriorates. This absorption of light by quartz glass is attributable to the impurities in the quartz glass; therefore, optical glass articles used to transmit ultraviolet light are made of synthetic silica glass containing minimum amounts of impurities.

It is thought that this conversion of natural silica glass to begin to absorb light of certain wave lengths in the region of ultraviolet light when subjected to ultraviolet irradiation is exclusively caused by paramagnetic defects created as a result of photochemical reaction which takes place in the inherent defects within the silica glass. Such light absorption attributable to the paramagnetic defects have been identified on quite a few occasions by means of ESR spectrum analysis, etc. Examples of such defects include E' center (Si ) and NBOHC (Si-0 ).

The paramagnetic defects tend to absorb the light of certain wave length ranges (absorption bands). The absorption bands within the ultraviolet light that are absorbed by the paramagnetic defects of the silica glass when the glass is exposed to the ultraviolet light include bands of 215 nm of E' center, and 260 nm (the latter requiring further confirmation). These absorption bands are relatively broad and tend to exhibit intensified absorption. For this reason, when such silica glass is used as an article to pass lasers, such as ArF laser (193 nm) and KrF laser (248 nm), serious problems are encountered. The inherent defects of the silica glass that transform into the paramagnetic defects are characteristically composed of units which are not $SiO_2$ units, e.g. SiOH and SiCl, or of units which contain either less or more oxygen than a $SiO_2$ unit, e.g. Si-Si, Si-0-0-Si.

Such synthetic silica glass is conventionally manufactured using the following procedure: to avoid the introduction of metallic impurities which cause the products to absorb ultraviolet light, the vapor of a higher purified silicon compound, such as silicon tetrachloride ($SiCl_4$), is directly introduced into an oxyhydrogen flame whereby it undergoes hydrolysis; the resulting fine glass particles are then directly deposited onto a rotating heat-resistive substrate, where the particles are fused and vitrified to form a transparent glass.

The transparent synthetic silica glass thus obtained exhibits acceptable light transmittance for the light in a wide region ranging to wave lengths as short as 190 nm. It has been used to make glass articles to pass ultraviolet laser light, such as, i-line light, excimer laser light, e.g. KrF (248 nm), XeCl (308 nm), XeBr (282 nm), XeF (351, 353 nm), ArF (193 nm), and also YAG quadruple-high harmonic wave (250 nm).

Examples of methods for manufacturing synthetic silica glass include that disclosed in Japanese Patent Laid-open Nos. 1-167258 and 1-197343 wherein the silicon tetrachloride employed as the starting material has a relatively high purity and the flame hydrolysis effected by oxyhydrogen flame is improved. The object is to produce a high-purity silica glass having a metallic content of 0.1 ppm or lower. The conditions under which the flame hydrolysis is conducted are adjusted such that the resulting synthetic silica glass will contain a predetermined concentration of OH groups. An optical-grade silica glass material having excellent laser resistance is obtained. Another method disclosed in Japanese Patent Laid-open No. 1-28240 provides a step to uniformize the glass material. Japanese patent Laid-open Nos. 3-88742, 3-88743, 3-101282, 3-109233 disclose a method wherein an additional step is provided to treat the glass in a hydrogen atmosphere at a raised temperature to cause the glass to contain hydrogen.

While these methods achieve certain objects, they do not provide acceptable process control or an economically practicable industrial manufacturing method which gives stable products of constant quality.

Attention is also drawn to the disclosures of JP-A-60,090836 and JP-A-2,080343.

In JP-A-60,090836 a silane ester, $R^1Si(OR^2)_4$ ($R^1 =$ H, Me, Et, $R^2 =$ Me, Et, x = 0 - 4), or the silane ester and H or vaporized combustible substances not containing Cl are burned to deposit $SiO_2$ on a substrate, and the resultant porous $SiO_2$ sintered body is heated and melted.

In JP-A-2,080343 Alkoxysilane such as tetraethoxysilane or methyltrimethoxysilane is allowed to react at a low temperature of 800 - 1200 °C in an oxyhydrogen flame and fine silica powder formed by hydrolysis is deposited on a refractory carrier to obtain a porous glass body. This glass body is sintered at a temperature lower than or equal to 1600 °C.

It is an object of the invention to provide a method for manufacturing synthetic silica glass for use with an excimer laser.

It is another object of the invention to provide a silica glass that exhibits minimal degradation in light transmittance in the ultraviolet light region even when the silica glass is irradiated with high energy ultraviolet light.

We have discovered a method which achieves this object and which provides a method for industrially manufacturing a silica glass article which makes an excellent stepper lens for an excimer laser.

More particularly, the invention provides a method for manufacturing a silica glass suitable for use with an excimer laser, comprising the steps of:

a) subjecting an alkoxysilane compound having the chemical formula $R^1_nSi(OR^2)_{4-n}$ wherein $R^1$ and $R^2$ are the same or different monovalent aliphatic hydrocarbon groups, and n is 0, 1, 2 or 3, to flame hydrolysis with an oxyhydrogen flame to produce a fine-grain silica;
b) depositing and fusing said fine-grain silica onto a rotating heat-resistive substrate to glassify the silica and produce a rod of silica glass;
c) locally heating the rod from step b) to a temperature higher than its softening point to impart shearing stress to the softened portion of the silica glass until any striae therein disappear in at least in the direction of the axis of said rod;
d) hot-forming the silica glass rod into a desired shape; and
e) annealing the silica glass by heating it to a temperature sufficiently high to relieve strain therein and maintaining the glass at the temperature for a predetermined time and then cooling the silica glass at a rate sufficiently slow to maintain uniform temperature distribution throughout the silica glass.

The temperature in the step c) is preferably at least about 1600°C; and the temperature in the step d) is preferably at least about 1500°C.

In the following description, reference will also be made to the accompanying drawings, in which:

Fig. 1 is a schematic drawing of an apparatus for manufacturing silica glass, which is used in the Example of the invention; and

Fig. 2 is a graph showing the absorption curves of a light having a wave length of 193 nm with respect to ArF laser irradiation pulse number obtained from the Example of the invention.

More particularly, the present invention comprises causing a flame hydrolysis of the alkoxysilane compound by means of oxyhydrogen flame to produce fine-grain silica; depositing and fusing said fine-grain silica on a turning, i.e. rotating, starting heat-resistive substrate to glassify the silica and obtain a rod of silica glass; homogenizing the silica glass by locally heating it to a temperature higher than the softening point to impart shearing stress to the softened portion of the silica glass until the striae disappear and to obtain a highly homogenized silica glass which does not possess striae at least in the direction of the axis of said rod; hot-forming the silica glass rod into a desired shape to obtain a silica glass article; and annealing the silica glass article by heating it to a temperature sufficiently high to relieve strain from the article. The heating is carried out by maintaining the heating temperature for a predetermined time and by cooling the silica glass at a rate sufficiently slow to maintain a uniform temperature distribution throughout the body of the silica glass article.

In the present invention, examples of the chemical compound represented by the formula of $R^1_nSi(OR^2)_{4-n}$ include methyltrimethoxysilane, methyltriethoxysilane, dimethyldimethoxysilane, dimethyldiethoxysilane, tetramethoxysilane and tetraethoxysilane.

During the flame hydrolysis of this alkoxysilane using an oxyhydrogen flame, the alkyl groups and alkoxyl groups of the alkoxysilane are completely oxidized in the oxyhydrogen flame until they become carbon dioxide and water. Thus, when an alkyltrialkoxysilane is used as the starting material, the alkoxyl group undergoes hydrolysis and the alkyl group undergoes oxidation, as in the conventional sol-gel method.

In the present invention, for the flame hydrolysis by means of the oxyhydrogen flame, a multiplex tubular burner having three or more concentric tubes may be used, as in the case of conventional direct flame hydrolysis. The innermost tube of the multiplex tubular burner provides for the passage for the reactant gas as well as the carrier gas (normally oxygen), and the outer tubes provide passages for oxygen and hydrogen gases, respectively.

However, when methyltrimethoxysilane is used as the reactant gas, it is desirable that the carrier gas is not oxygen, since methyltrimethoxysilane is highly reactive with oxygen.

Also, in the present invention, when a methoxysilane is used as the reactant gas, it tends to react with oxygen at the exits of the burner nozzles to thereby produce fused glass, which deposits on the tips of the burner nozzles and may plug the exits of the nozzles, particularly if the flow rate of the methoxysilane gas is slow. It is therefore desirable to provide a nozzle port for an inert gas between the nozzle ports for the reactant gas and the oxygen gas. Preferable examples of the carrier gas for carrying the reactant gas are helium, argon, and nitrogen. It is also preferable to use a multiplex tubular burner which has no less than four tubes.

In the present invention, the fine-grain silica created by the direct flame hydrolysis is deposited and fused at the same time onto a turning or rotating target substrate so that the glass grows like a crystal and produces a synthetic silica glass rod. The synthetic silica glass obtained possesses layers of striae extending along the growth face, the pattern of which depends on factors such as the variation of the ambient temperature with time. For this reason, in the present invention, a homogenization treatment is conducted to eliminate the striae from the synthetic silica glass to form a highly homogenized silica glass which does not possess striae at least in the direction of the axis of the silica glass rod. Preferably, the rod contains no striae in any of its three orthogonal directions including the axial direction. The homogenization treatment may be conducted in accordance with any of the methods disclosed in U.S. Patent Nos. US-A-2,904,713, 3,128,166, 3,128,169 and 3,485,613.

For example, the homogenization treatment may be effected in the following manner: the silica glass rod is held on a turning lathe, and the silica glass is locally heated to a temperature higher than the softening point with a burner or electric heater to impart shearing stress to the softened portion of the rod until the striae disappear. During this heating, the silica glass rod is continuously rotated and the rod portion or location being heated is gradually shifted axially until the entire length of the rod has been heated and homogenized. The rod is heated to a temperature higher than the softening point, and preferably 1600°C or higher. The rate of the axial shifting of the heated portion is determined on the basis of the shape and weight of the material to be homogenized.

The silica glass is hot-formed to obtain a silica glass article which has a shape and dimension suitable as a stepper glass and the like. Generally, the silica glass is charged into a crucible or mold having the desired interior shape. The mold is heated in a furnace at a temperature of 1500°C or higher so that the silica glass molds into the shape by gravitation. The crucible used for this purpose may be the same as that used in the hot-forming of the conventional silica glass, for example a carbon crucible. The heating furnace may be of the type equipped with a carbon heater commonly used for hot-forming conventional silica glass. For this reason, the hot-forming atmosphere ought to be an inert gas atmosphere, e.g. a vacuum, hydrogen or nitrogen. The heating temperature and the heating time are determined on the basis of the desired shape and size of the silica glass article.

The hot-formed silica glass article is annealed to relieve strain from the glass article. This is carried out by heating the glass article to a temperature sufficiently high to relieve strain from the article, maintaining the temperature for a predetermined time and cooling the silica glass at a rate sufficiently slow to maintain a uniform temperature distribution throughout the body of the silica glass article. The temperature at which the softening of the synthetic silica glass takes place is about 1025°C. However, the annealing may be effectively carried out at a temperature of preferably 800-1250°C, more preferably 1100-1250°C. If a silica glass article is intended for transmission of excimer laser light, the strain in the silica glass article should not be greater than 5 nm/cm. If the annealing temperature is as indicated above, almost no strain remains unrelieved when the silica glass is gradually cooled down. Preferably, the cooling rate is as slow as possible. In addition, this annealing treatment contributes to uniformity in the refractive index of the silica glass.

Since the refractive index of the silica glass is determined in relation to the fictive temperature, it is important to appropriately set the fictive temperature for the annealing treatment. In other words, to obtain a uniform distribution of refractive index, it is necessary to select a fictive temperature such that the fictive temperature of the entire silica glass article to be annealed is uniform. This is achieved by heating the silica glass to a temperature higher than the softening point, and maintaining this temperature for a sufficient length of time to allow the temperature distribution in the glass body to become uniform, and decreasing the temperature as slowly as possible. The purpose of this gradual cooling is to avoid creation of a temperature difference between localized portions of the silica glass. If the cooling rate is increased, a temperature difference is created between localized positions in the silica glass and, as a result, different fictive temperatures are set and it becomes impossible to obtain a uniformly distributed refractive index.

In the present invention, the heating temperature for the annealing treatment is preferably 800-1250°C, and more preferably is about 1200°C, which is higher than the softening point of the synthetic silica glass. The heating time and the rate for decreasing the temperature are determined based on the size and shape of the article to be annealed. Generally speaking, the larger the article, the longer the article should be heated, and the slower the temperature decrease rate.

In the present invention, an alkoxysilane compound having a chemical formula of $R^1_n Si(OR^2)_{4-n}$ is used as the raw material for the manufacture of the silica glass. This makes it possible to manufacture the silica glass article an an industrial scale wherein the concentration of the inherent defects, which transform to the paramagnetic defects when exposed to ultraviolet irradiation, as well as the concentration of impurities such as chlorine are reduced. It is thus possible to manufacture a silica glass article with minimal paramagnetic defects.

In the, inventive silica glass article, manufactured by the method of the invention, the absorption amount of the ultraviolet light is restrained from increasing even when the silica glass is exposed to ultraviolet irradiation, and the uniformity is improved, so that an excellent stepper lens for transmitting excimer laser can be made.

EXAMPLE

The following Example illustrates the invention. Modifications and variations of the present invention are possible, and it is understood that the invention is not limited to the description and the following Example.

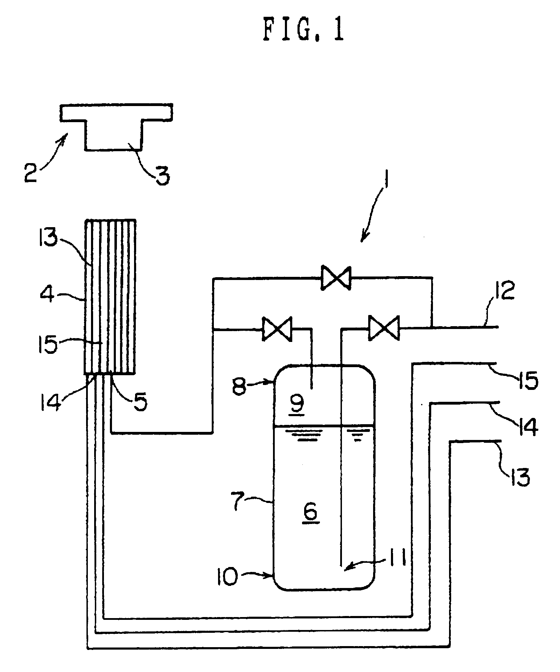

Referring to Fig. 1, in a silica glass manufacturing apparatus 1, a target assembly 2 integrally formed with a disk-like target substrate 3 is arranged such that the front face of the target substrate 3 looks downward, and a quadruplex burner 4 is positioned vertically such that the center line of the burner is aligned with the center of the target substrate 3. The target assembly 2 is adapted to rotate about its center line. The quadruplex burner 4 consists of four concentric tubes forming four passages.

A closed bubbler tank 7 topped by a head part 8 is charged with a quantity of methyltrimethoxysilane 6, and a space 9 is formed above the level of the methyltrimethoxysilane 6.

The central passage 5 of the quadruplex burner 4 is connected via a valve to the head part 8 of the bubbler tank 7 to communicate with the space 9. A nitrogen carrier gas line 12 is passed into the bubbler tank 7 at the head part 8 and its blow end opens in the vicinity of the bottom of the bubbler tank 7.

The outermost passage 13 of the quadruplex burner 4 provides a passage for hydrogen gas, and the passage 14 next to the passage 13 provides a passage for oxygen gas. A passage 15 is formed between the central passage 5 and the oxygen passage 14 of a sealing gas.

The silica glass manufacturing apparatus 1 used in the present invention operates as follows. First, the nitrogen carrier gas is introduced in the methyltrimethoxysilane 6 contained in the bubbler tank 7 by way of the line 12, whereby the methyltrimethoxysilane starts evaporating. The vapor of the methyltrimethoxysilane is carried by the nitrogen carrier gas and sent to the quadruplex burner 4. The hydrogen gas, oxygen gas and the seal gas are introduced into the quadruplex burner 4 by way of the respective conduits.

The methyltrimethoxysilane blown out from the central passage 5, together with the nitrogen carrier gas, is hydrolyzed and oxidized by means of the oxyhydrogen flame created by the hydrogen gas and the oxygen gas, to thereby produce silicon dioxide in the form of fine grains. This fine-grain silicon dioxide deposits and, at the same time, fuses on the surface of the turning target substrate 3 to glassify and form a rod of silica glass.

Using the procedure commonly adopted in the conventional direct flame hydrolysis wherein silicon tetraoxide ($SiCl_4$) is used to make silica glass, methyltrimethoxysilane, $Si(CH_3)(OCH_3)_3$, was used to produce a synthetic silica glass rod having an outer diameter of 120 mm and a length of 500 mm (Viosil-SCF, a product of Shin-Etsu Chemical Co., Ltd.); Viosil-SCF is a Registered Trade Mark. Each end of the cylindrical transparent glass body was fitted with a silica glass support rod, and the whole body was fixed on the chuck of a lathe. The lathe was operated so as to turn the synthetic silica glass body, which was locally heated and softened by a propane gas burner to impart a shearing stress to the softened portion of the silica glass. The heating temperature was about 2000°C. The thus treated transparent glass possessed no striae in the three orthogonal directions including the axial direction.

That transparent silica glass portion which received the above thermal shearing treatment was cut out, and was heated in a carbon crucible by a heating furnace equipped with a carbon heater. As a result, the silica glass was hot-molded into a cylinder measuring 240 mm in diameter and 90 mm in length. The molding temperature was about 1700°C and the molding was conducted in a nitrogen gas atmosphere.

The thus obtained molded body was subjected to an annealing treatment, wherein the temperature was first raised to 1100°C, then lowered to 600°C at a rate of 0.1°C/minute. This thermal treatment was conducted in the atmospheric air. The birefringence (double refraction) observed in the thus annealed glass body was 2 nm/cm and the distribution of refractive index was observed to be highly uniform; the difference between the maximum value and the minimum value of the refractive index being $1 \times 10^{-6}$ or smaller.

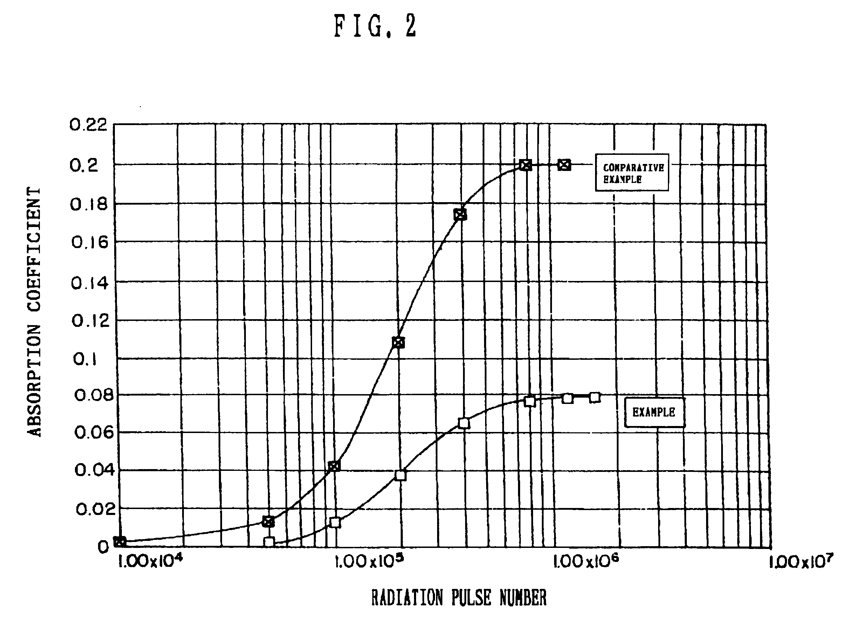

To determine the amount of paramagnetic defects created by ultraviolet irradiation, a portion was cut out from the above transparent silica glass, and machined and polished to produce a rectangular parallelopiped body measuring 10 mm by 10 mm by 40 mm. An ArF laser was applied to the silica glass body, and the transmittance of a light having a wave length of 193 nm was examined with different radiation pulse numbers. The radiation condition of the ArF laser was such that the energy density was 200 $mJ/cm^2$ pulse, and the frequency was 100 Hz. Fig. 2 shows the absorption curve of the light having a wave length of 193 nm with respect to the ArF laser irradiation pulse number. The ordinate represents absorption coefficient which is measured in terms of the absorption divided by the glass thickness (cm). The absorbance is calculated by means of the following equation wherein $I_o$ is theoretical internal transmittance and $I$ is internal transmittance.

$$[absorbance] = -\log(I/I_o)$$

COMPARATIVE EXAMPLE

Employing the same silica glass manufacturing apparatus 1 shown in Fig. 1, the inventors obtained a similar glass rod from $SiCl_4$. The size of the glass rod was the same as that of the glass rod obtained in the previous example, namely 120 mm in outer diameter and 500 mm in length. This transparent glass rod was subjected to exactly the same treatments as in the previous example. Then, in the same manner as in the example, the ArF laser was applied to the glass body, and the absorption curve obtained was as shown in Fig. 2.

**Claims**

1. A method for manufacturing a silica glass suitable for use with an excimer laser, comprising the steps of:

   a) subjecting an alkoxysilane compound having the chemical formula $R^1{}_nSi(OR^2)_{4-n}$ wherein $R^1$ and $R^2$ are the same or different monovalent aliphatic hydrocarbon groups, and n is 0, 1, 2 or 3, to flame hydrolysis with an oxyhydrogen flame to produce a fine-grain silica;
   b) depositing and fusing said fine-grain silica onto a rotating heat-resistive substrate to glassify the silica and produce a rod of silica glass;
   c) locally heating the rod from step b) to a temperature higher than its softening point to impart shearing stress to the softened portion of the silica glass until any striae therein disappear in at least in the direction of the axis of said rod;
   d) hot-forming the silica glass rod into a desired shape; and
   e) annealing the silica glass by heating it to a temperature sufficiently high to relieve strain therein and maintaining the glass at the temperature for a predetermined time and then cooling the silica glass at a rate sufficiently slow to maintain uniform temperature distribution throughout the silica glass.

2. A method as claimed in claim 1, characterized in that the temperature in step c) is at least about 1600°C.

3. A method as claimed in claim 1 or 2, characterized in that the temperature in step d) is at least about 1500°C.

4. A method as claimed in any of claims 1 to 3, characterized in that the annealing temperature in step e) is from about 800°C to 1250°C.

5. A method as claimed in any of claims 1 to 4, characterized in that the alkoxysilane is selected from methyltrimethoxysilane, methyltriethoxysilane, dimethyldimethoxysilane, dimethyldiethoxysilane, tetramethoxysilane and tetraethoxysilane.

6. A method as claimed in any of claims 1 to 4, characterized in that the alkoxysilane is methyltrimethoxysilane.

**Patentansprüche**

1. Verfahren zur Herstellung eines zur Verwendung mit einem Excimer-Laser geeigneten Quarzglases mit den Schritten:

   a) eine Alkoxysilan-Verbindung mit der chemischen Formel $R^1{}_nSi(OR^2)_{4-n}$, wobei $R^1$ und $R^2$ die gleichen oder verschiedene einwertige aliphatische Kohlenwasserstoffgruppen sind und n 0, 1, 2 oder 3 ist, einer Flammenhydrolyse mit einer Wasserstoff-Sauerstoff-Flamme aussetzen, um ein feinkörniges Siliciumdioxid zu erzeugen;

   b) Abscheiden und Schmelzen des feinkörnigen Siliciumdioxids auf ein bzw. einem rotierenden hitzebeständigen Substrat, um das Siliciumdioxid in Glas umzuwandeln und einen Stab aus Quarzglas zu erzeugen;

   c) lokales Aufheizen des Stabes aus Schritt b) auf eine höhere Temperatur als sein Erweichungspunkt, um den erweichten Bereich des Quarzglases mit einer Scherspannung zu beaufschlagen, bis alle Schlieren darin zumindest in der Richtung der Achse des Stabes verschwinden;

   d) Heißformen des Quarzglasstabes in eine gewünschte Form; und

   e) Tempern des Quarzglases durch Heizen des Quarzglases auf eine ausreichend hohe Temperatur, um Spannungen darin zu lösen, und Halten des Glases auf der Temperatur für eine vorbestimmte Zeit und dann Abkühlen des Quarzglases mit einer ausreichend niedrigen Rate, um im ganzen Quarzglas eine gleichmäßige Temperaturverteilung aufrechtzuerhalten.

2. Verfahren nach Anspruch 1, dadurch gekennzeichnet, daß die Temperatur in Schritt c) zumindest ungefähr 1600°C beträgt.

3. Verfahren nach Anspruch 1 oder 2, dadurch gekennzeichnet, daß die Temperatur in Schritt d) zumindest ungefähr 1500°C beträgt.

4. Verfahren nach einem der Ansprüche 1 bis 3, dadurch gekennzeichnet, daß die Temper-Temperatur in Schritt e) zwischen ungefähr 800°C und 1250°C liegt.

5. Verfahren nach einem der Ansprüche 1 bis 4, dadurch gekennzeichnet, daß das Alkoxysilan ausgewählt ist aus Methyltrimethoxysilan, Methyltriethoxysilan, Dimethyldimethoxysilan, Dimethyldiethoxysilan, Tetramethoxysilan und Tetraethoxysllan.

6. Verfahren nach einem der Ansprüche 1 bis 4, dadurch gekennzeichnet, daß das Alkoxysilan Methyltrimethoxysilan ist.

## Revendications

1. Procédé de fabrication d'un verre de silice adapté à une utilisation avec un laser à excimer, comprenant les étapes de:

   a) soumettre un composé alkoxysilane ayant la formule chimique $R^1_nSi(OR^2)_{4-n}$ dans laquelle $R^1$ et $R^2$ sont des groupes hydrocarbures aliphatiques monovalents identiques ou différents, et n vaut 0, 1, 2 ou 3, à une hydrolyse à la flamme avec une flamme oxyhydrique pour produire une silice à grains fins;
   b) déposer et fondre ladite silice à grains fins sur un substrat tournant résistant à la chaleur pour vitrifier la silice et produire une tige de verre de silice;
   c) chauffer localement la tige de l'étape b) à une température supérieure à son point de ramollissement pour imposer une contrainte de cisaillement à la portion ramollie du verre de silice jusqu'à ce que les stries qui y figurent disparaissent au moins dans la direction de l'axe de ladite tige;
   d) façonner à chaud la tige en verre de silice suivant une forme désirée; et
   e) recuire le verre de silice en le chauffant à une température suffisamment élevée pour relâcher les déformations qui y règnent et maintenir le verre à la température pendant une durée prédéterminée et refroidir ensuite le verre de silice à une vitesse suffisamment faible pour maintenir uniforme la distribution de la température au travers du verre de silice.

2. Procédé tel que revendiqué dans la revendication 1, caractérisé en ce que la température dans l'étape c) est au moins d'environ 1600°C.

3. Procédé tel que revendiqué dans la revendication 1 ou 2, caractérisé en ce que la température dans l'étape d) est au moins d'environ 1500°C.

4. Procédé tel que revendiqué dans l'une quelconque des revendications 1 à 3, caractérisé en ce que la température de recuit dans l'étape e) est environ de 800°C à 1250°C.

5. Procédé tel que revendiqué dans l'une quelconque des revendications 1 à 4, caractérisé en ce que l'alkoxysilane est choisi parmi le méthyltriméthoxysilane, le méthyltriéthoxysilane, le diméthyldiméthoxysilane, le diméthyldiéthoxysilane, le tétraméthoxysilane et le tétraéthoxysilane.

6. Procédé tel que revendiqué dans l'une quelconque des revendications 1 à 4, caractérisé en ce que l'alkoxysilane est le méthyltriméthoxysilane.

# FIG. 1

# FIG. 2

EP 0 525 984 B1